(19) Europäisches Patentamt
European Patent Office
Office européen des brevets

(11) **EP 2 885 549 B1**

(12) **EUROPEAN PATENT SPECIFICATION**

(45) Date of publication and mention
of the grant of the patent:
**09.01.2019 Bulletin 2019/02**

(21) Application number: **12746107.7**

(22) Date of filing: **15.08.2012**

(51) Int Cl.:
*F16C 33/64* *(2006.01)*    *F16C 19/26* *(2006.01)*
*F16C 23/08* *(2006.01)*    *F16C 33/36* *(2006.01)*
*F16C 33/58* *(2006.01)*

(86) International application number:
**PCT/EP2012/065922**

(87) International publication number:
**WO 2014/026710 (20.02.2014 Gazette 2014/08)**

(54) **REDUCING MICROPITTING IN ROLLER BEARINGS**

REDUZIERUNG DER GRAUFLECKIGKEIT IN WÄLZLAGERN

REDUCTION DES MICRO-PIQÛRES DANS LES PALIERS À ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**24.06.2015 Bulletin 2015/26**

(73) Proprietor: **Aktiebolaget SKF
415 50 Göteborg (SE)**

(72) Inventors:
• **BRIZMER, Victor
NL-3432 RP Nieuwegein (NL)**

• **MORALES ESPEJEL, Guillermo
NL-3402 BH Ijsselstein (NL)**
• **STADLER, Kenred
97424 Schweinfurt (DE)**

(74) Representative: **Kohl, Thomas et al
SKF GmbH
Gunnar-Wester-Strasse 12
97421 Schweinfurt (DE)**

(56) References cited:
**EP-A1- 1 754 903    GB-A- 2 216 200
US-A- 5 586 826**

**Description**

FIELD OF THE INVENTION

The present invention relates to the use of a roller bearing in applications where the bearing experiences sliding at a rolling contact interface in a direction transverse to the direction of rolling. More specifically, the invention relates to the use of a rolling contact surface topography that is adapted to reduce micropitting. A method of reducing micropitting is also described.

BACKGROUND TO THE INVENTION

Micropitting is a term introduced initially by the gear industry to describe tiny surface spalls and cracks, sometimes appearing on the surface of rolling/sliding contacts. The standard ISO 15243 [1] on Rolling Bearings - Damages and Failures - refers to this damage or failure mode as "surface distress" or "surface initiated fatigue", which is: The failure of the rolling contact metal surface asperities under a reduced lubrication regime and a certain percentage of sliding motion causing the formation of (1) burnished areas (glazed; grey stained), (2) asperity microcracks, (3) asperity microspalls.

In many industrial bearing applications, power density has increased substantially due to the need for higher efficiency (weight and cost reduction by downsizing). With the increasing severity of the working conditions (e.g. heavier loads in combination with higher temperatures, thinner oil films and/or boundary lubrication conditions) machine components can suffer from surface initiated fatigue (or micropitting). In rolling element bearings, micropitting is not necessarily a primary failure mode, but it can facilitate/accelerate the appearance of other failure modes like indentations, surface initiated spalling and seizure.

Thus, micropitting is one of the mechanisms responsible for life-limiting bearing wear. In applications where the roller experiences some sliding not only in the direction of rolling, but also in the transverse direction, the onset of micropitting can be accelerated, leading to a significant reduction in bearing fatigue life. One approach to mitigating the effects of micropitting is to ensure that the rolling contact surfaces in such bearings are always separated by a lubricant film of sufficient thickness. Especially when grease lubrication is employed, however, the bearing will at times operate under a boundary or mixed lubrication condition. In short, adequate film thickness cannot always be ensured.

A second approach to combating micropitting and improving the wear and fatigue life of bearings is to employ surface engineering techniques, which alter the chemical and/or topographical properties of the rolling contact surfaces. An example of such a technique is disclosed in US 5503481, issued to The Timken Company. The patent describes a process for providing an isotropic finish on rolling contact surfaces of a bearing. After a machining operation such as grinding, which creates an oriented roughness profile on the rolling surface of a bearing component, the bearing component is immersed in a chemical solution which reacts with the bearing steel to form a protective coating. The chemical solution further comprises abrading elements which, via agitation, remove the protective coating on the upper elevations of the roughness profile, enabling a further chemical reaction with the underlying steel. The height of the roughness profile therefore diminishes, to leave shallow pits with no particular orientation (i.e. isotropic). Finally, in the absence of the chemical solution, the protective coating is removed.

The resulting finish is often referred to as a superfinish, and has been shown to significantly improve resistance to the mechanisms of bearing wear, including micropitting. Bearings with a superfinish are, however, more expensive than bearings with a conventional surface finish. Consequently, there is room for improvement in terms of providing a bearing which has increased resistance to micropitting in transverse sliding applications, which can be manufactured in a straightforward and economical manner.

SUMMARY OF THE INVENTION

In rolling element bearings, lubrication and surface roughness play a key role in micropitting and surface damage. The present invention is based on the understanding that the role played by lubrication and roughness is very much related to the effect of local friction forces (at asperity level) and stress concentrations. The invention is further based on the understanding that a rougher rolling contact surface imposes load micro cycles on a smoother, opposing rolling contact surface, in the presence of sliding and in the absence of full-film lubrication. Consequently, the present invention defines the use of a first roughness lay according to claim 1 in a roller bearing having a relatively rough rolling contact surface, the surface topography of which is optimised to prevent or reduce micropitting in an opposing, relatively smooth rolling contact surface.

The present inventors have found that an orientation of the roughness profile on a rolling contact surface - known as the roughness lay - plays an important role. Simulations with a mathematical model for micropitting have revealed that an orthogonal component of the friction force to the roughness lay can substantially increase the stress concentration at the "root" zone of the roughness for the rougher surface and on the micro-contact edges for the smoother surface.

Therefore, a longitudinal roughness lay is most resistant to micropitting due to sliding in the direction of rolling, since the lay is oriented in the same direction as the sliding friction vector. The large majority of roller bearings have such a roughness lay on their rolling contact surfaces, due to the mechanical finishing process (e.g. honing) that is conventionally applied. In applications where the bearing experiences transverse sliding, as well as longitudinal sliding, the conventional longitudinal roughness lay will be prone to micropitting. The present inventors have recognized that a non-longitudinal roughness lay is beneficial in such applications.

Specifically, the present invention resides in the use of a first roughness lay according to claim 1 in a roller bearing that experiences sliding at a rolling contact interface in a direction transverse to a direction of rolling. The bearing has an inner ring, an outer ring and at least one set of rollers, which are disposed between an inner raceway of the bearing inner ring and an outer raceway of the bearing outer ring. An outer surface of at least one roller is defined as a first rolling contact surface, while at least one of the inner raceway and the outer raceway is defined as a second rolling contact surface. Furthermore, one of the first and second rolling contact surfaces has a greater roughness $R_q$ than the other of the first and second rolling contact surfaces. According to the invention, the rougher of the first and second rolling contact surfaces is provided with a roughness lay with an orientation angle θ relative to the direction of rolling, whereby 0 < θ < 90°.

The roughness parameter $R_q$ is the root-mean-square average roughness, as defined in ISO 4287, which may be measured using, for example, an optical profilometer, in compliance with ISO 4288.

It should be noted that the provision of an oriented roughness lay does not affect the actual value of the surface roughness $R_q$. The rolling contact surface that is provided with a roughness lay according to the invention therefore has a surface roughness that lies within the normal range applicable for bearings that are made from commonly-used, high-quality hardened bearing steel, in accordance with good manufacturing practice.

In some embodiments, the roughness lay is provided on each roller in a bearing. In other embodiments, the roughness lay is provided on the inner raceway and/or on the outer raceway, depending on the application.

In many transverse sliding applications, the bearing will experience oscillating (back and forth) transverse sliding. A bearing which supports an inking roller in an offset printing machine is one example of such an application. Advantageously, the rougher rolling contact surface then comprises a second roughness lay with a second orientation angle relative to the direction of rolling, which second angle is oppositely oriented relative to the first orientation angle of the first roughness lay. In other words, the second roughness lay has an orientation angle θ of -90° < θ < 0. The resulting surface topography therefore has a cross-hatched pattern. Suitably, the first roughness lay is optimised for sliding in one transverse direction and the second roughness lay is optimised for sliding in the other transverse direction.

The first and second roughness lays can be produced in a two-step machining operation. Let us assume that the roughness lays are provided on the outer circumference of a bearing inner ring - i.e. the inner raceway. After grinding, a bearing raceway is typically honed. To produce a bearing ring according to the invention, the ring is held at a first orientation relative to the honing tool during a first step of the honing process. To produce a second roughness lay, the orientation angle is then changed and a second honing operation is performed.

The magnitude of the orientation angle, which is best suited for a particular application, depends on the relative sliding velocities experienced during operation. When the maximum transverse sliding velocity is greater than the maximum longitudinal sliding velocity, the roughness lay suitably has an orientation angle of greater than 45°. When the maximum longitudinal sliding velocity is greater than the maximum transverse sliding velocity, the roughness lay suitably has an orientation angle of less than 45°.

Specifically, the optimum orientation angle for the roughness lay may be calculated according to the following relationship:

$$\theta = \tan^{-1}\left(u_{sy} / u_{sx}\right),$$

where

$u_{sx}$ = maximum sliding velocity along the rolling direction x and
$u_{sy}$ = maximum sliding velocity along the transverse direction y.

As a result of the oriented roughness lay(s), stress concentrations are reduced in the direction of the friction force at the edges of the "micro-grooves" from the manufacturing (honing) process. The micro-stress cycles are also reduced, thereby delaying or preventing the onset of microptting caused by poor lubrication and sliding.

An embodiment (not claimed) may also define a method of reducing microptting in a roller bearing which, in use of the bearing, experiences sliding in a direction transverse to the direction of rolling, the bearing comprising an inner ring, an outer ring and at least one set of rollers, which are disposed between an inner raceway of the bearing inner ring and an outer raceway of the bearing outer ring, wherein:

- a cylindrical surface of at least one roller is defined as a first rolling contact surface;
- at least one of the inner raceway and the outer raceway is defined as a second rolling contact surface; and
- one of the first and second rolling contact surfaces has a greater surface roughness $R_q$ than the other of the first and second rolling contact surfaces.

According to such embodiment (not claimed) the method comprises a step of:

-   providing the rougher of the first and second rolling contact surfaces with a first roughness lay having an angle of orientation θ relative to the direction of rolling, whereby 0 < θ < 90°.

In a further development, the orientation angle of the roughness lay is optimised according to the following relationship:

$$\theta = \tan^{-1}\left(u_{sy} / u_{sx}\right),$$

where

    $u_{sx}$ = maximum sliding velocity along the rolling direction $x$ and
    $u_{sy}$ = maximum sliding velocity along the transverse direction $y$.

In a still further development, when the bearing experiences oscillating transverse sliding during use, the method comprises a further step of provided a second roughness lay on the rougher rolling contact surface, the second roughness lay having a second orientation angle relative to the direction of rolling, which oppositely oriented to the first orientation angle..

Preferably, the first roughness lay is provided during a honing process in which the bearing component comprising the rougher rolling contact surface is held at the first orientation angle relative to an axis of the honing tool. When a second roughness lay is provided, the method further comprises holding the bearing component at the second orientation angle relative to the hone stone axis during honing.

Thus a bearing with increased resistance to micropitting can be produced economically using conventional machining techniques. Other advantages of the present invention will become apparent from the following detailed description and accompanying drawings.

DESCRIPTION OF THE FIGURES

In the following, the invention is described with reference to the accompanying drawings, in which:

Fig. 1    shows a cross-section of a unit comprising a roller bearing;

Fig. 2    shows a surface topography with a longitudinal roughness lay;

Fig. 3    shows a surface topography with a transverse roughness lay;

Fig. 4    schematically shows a first example of a surface topography;

Fig. 5    schematically shows a second example of a surface topography.

DETAILED DESCRIPTION

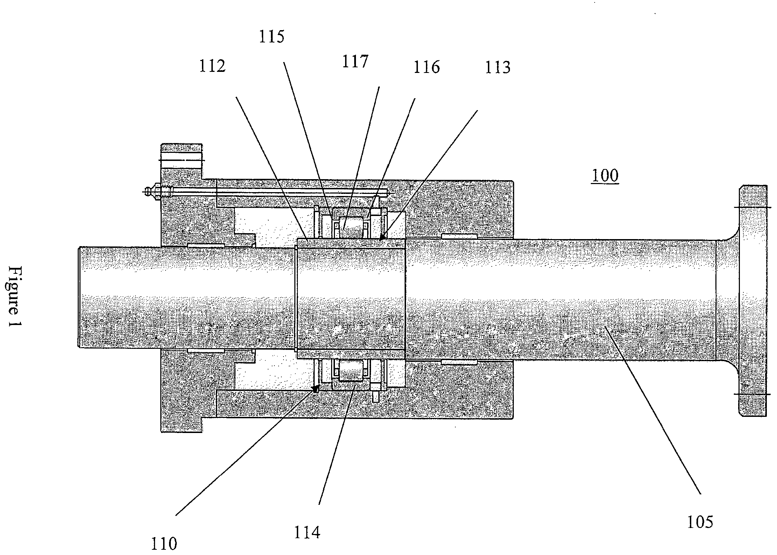

Figure 1 shows a cross-section of a bearing and shaft unit 100 for supporting an inking roll in a printing machine. During operation of the printing machine, the shaft 105 not only rotates, but also oscillates back and forth in an axial direction. The unit thus comprises a specially adapted cylindrical roller bearing 110. The bearing comprises an outer ring 114 with first and second flanges 115, 116, which axially retain a set of cylindrical rollers 117. The bearing further comprises an extra-wide inner ring 112, mounted on the rotational and oscillating shaft 105. The inner ring has a purely cylindrical outer surface, and therefore permits the inner ring to move axially back and forth relative to the outer ring 114 and the rollers 117.

During operation, the bearing 110 therefore experiences transverse sliding in both axial directions at a contact interface between an inner raceway 113 of the inner ring 112 and a rolling contact surface of each roller. A certain amount of sliding in the rolling direction (longitudinal direction) also takes place. Such sliding conditions can readily lead to micropitting on a rolling contact surface of the bearing, in the absence of full-film lubrication.

The bearing 110 has a rolling contact surface with a topography that is adapted to minimize micropitting under conditions of transverse and longitudinal sliding and poor lubrication. The design of the topography is based on the understanding that the role played by lubrication and roughness is very much related to the effect of local friction forces (at asperity level) and stress concentrations.

In boundary or mixed-lubrication, when the lubricant film at a rolling contact interface has insufficient thickness to separate the contact, surface irregularities will influence the way that dry and lubricated spots are distributed within the contact. Discontinuities in surface traction and possible stress concentrations must also be considered. High roughness (or high roughness slopes) will promote local film collapse, high contact pressures and tractions. This will enhance stress concentrations in the critical areas of traction discontinuities. The presence of some sliding favours surface tractions, and the inventors have found that micropitting appears first in areas of pressure discontinuities (high pressure gradients) associated with roughness.

Surprisingly, the inventors have also found that when one rolling contact surface is rougher than an opposing rolling contact surface - in the presence of poor lubrication conditions and some sliding - micropitting first appears on the smooth surface, since the rougher surface imposes a stress history (pressure amplitudes) upon the smoother one. The smoother surface "sees" a fluctuation in pressures (load micro cycles), while all points on the rougher surface always "feel" the same stresses (which are higher in the contact areas and lower in the non-contact areas). In other words, the rougher surface imposes load micro cycles on the smoother surface of each roller, meaning that the smoother surface will be more prone to micropitting in the presence of some sliding.

In the bearing 110 depicted in Figure 1, the inner raceway 113 has greater roughness $R_{q1}$ than a roughness $R_{q2}$ of the cylindrical outer surface of the rollers 117. The roughness parameter $R_q$ represents the root mean square (rms) average between height deviations (asperities) and the mean line/surface, taken over the evaluation length/area. Let us assume that the bearing 110 is grease lubricated and, in use, periodically experiences conditions where the thickness of the lubricant film which separates the inner raceway 113 and the rollers 117 is less than a composite roughness $R_{qc}$ of the contact interface, whereby $R_{qc} = \sqrt{R^2_{q1} + R^2_{q2}}$ .

Consequently, there is a risk of micropitting on the rolling contact surface of the rollers 117, partly caused by the greater roughness of the inner raceway 113.

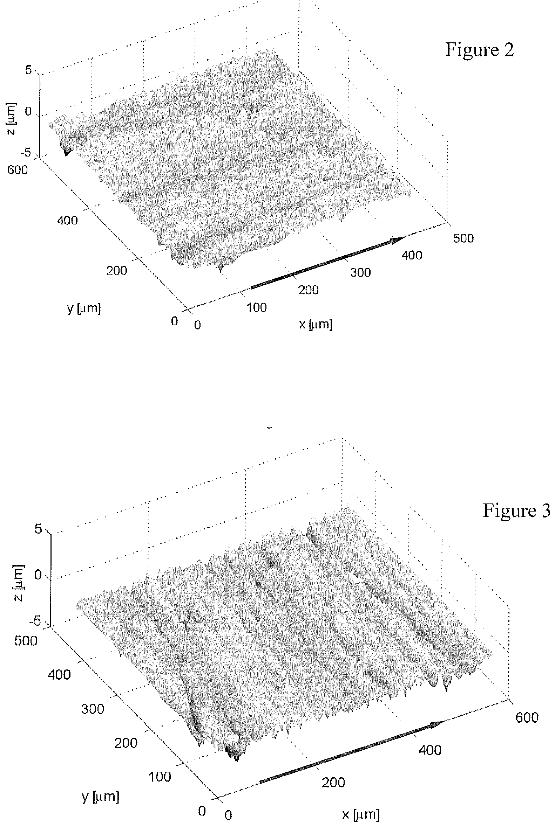

To minimise this risk, the inner raceway is provided with a specially adapted surface topography. Specifically, the inventors have found that the orientation of the roughness lay plays a key role. An example of a roughness lay that is typically found on a bearing raceway, is shown in Figure 2. Machining of the raceway, e.g. grinding followed by honing, produces a directional roughness profile or roughness lay. In this example, the roughness lay is oriented in the longitudinal direction (x-direction), which coincides with the direction of rolling direction.

Simulations with a mathematical model for micropitting have revealed that an orthogonal component of the friction force to the roughness lay can substantially increase the stress concentration at the "root" zone of the roughness for the rougher surface and on the micro-contact edges for the smoother surface. Therefore, in applications where sliding occurs in the transverse direction (y-direction), a longitudinal roughness lay will maximize the aforementioned stress concentrations which are due to transverse sliding, leading to a high risk of micropitting.

An example of a transverse roughness lay is shown in Figure 3. Such a roughness lay minimizes the stress concentrations due to transverse sliding. However, during rolling contact, slip inevitably occurs in the rolling direction (x-direction). Therefore, a transverse roughness lay will maximize the stress concentrations which are due to longitudinal sliding, again leading to a high risk of micropitting. Tests performed on bearing surfaces that experience rolling contact in a longitudinal direction and some sliding in a longitudinal direction, under boundary-mixed lubrication conditions, have confirmed that a transverse roughness lay is more prone to micropitting than a longitudinal lay.

The solution is to orient the roughness lay at an angle θ relative to the longitudinal of between 0 and 90 degrees, such that the roughness lay is oriented in the direction of the overall friction vector.

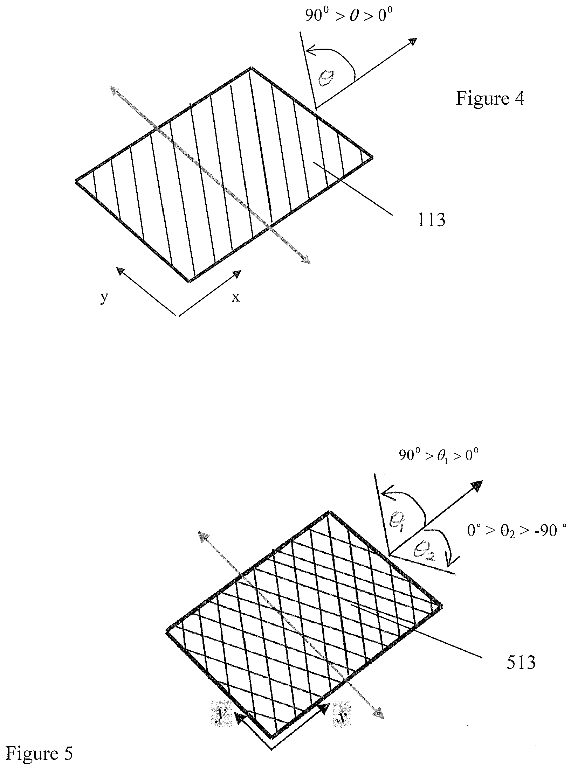

An example of a suitable surface topography for the inner raceway 113 of the bearing from Figure 1 is schematically shown in Figure 4. In this example, the roughness lay is oriented at an angle θ of approximately 60 ° relative to the direction of rolling x. Such an orientation is suitable when the transverse sliding is more intense than the longitudinal sliding. The optimum orientation angle for a specific application may be selected on the basis of the following relationship:

$$\theta = \tan^{-1}(u_{sy}/u_{sx}),$$

where

$u_{sx}$ = maximum sliding velocity along the rolling direction $x$ and
$u_{sy}$ = maximum sliding velocity along the transverse direction $y$.

In the application described with reference to Figure 1, the inner ring 112 moves back and forth in transverse direction y. Therefore, the surface lay is preferably optimized in both transverse directions.

An example of a preferred surface topography is schematically shown in Figure 5. The inner raceway 513 in this example has a first roughness lay with a first orientation angle $\theta_1$ relative to the rolling direction x. The first orientation angle is optimized for sliding in one transverse direction. The inner raceway 513 is further provided with a second roughness lay with a second orientation angle $\theta_2$ relative to the rolling direction x. The second roughness lay is oppositely oriented and is optimized for sliding in the opposite transverse direction.

The surface topography of the inner raceway 513 may be produced in the following way:
After grinding, the inner raceway undergoes a two step honing process. In the first step, the inner ring is held at an angle relative to the honing tool during the honing. Suitably, an axial centerline of the ring is angled at the first orientation angle $\theta_1$ relative to an axial centerline of the honing tool. In the second step of the honing process, the relative angle between the axial centerlines of the inner ring and the honing tool is changed to the second orientation angle $\theta_1$.

Consequently, a bearing component for use in a bearing according to the invention can be produced by a simple modification of a conventional production line.

The invention has been described with reference to a cylindrical roller bearing in which the inner ring oscillates back and forth and has a roughness greater than that of the rollers. As will be understood, a surface topography with one or two roughness lay be provided on a roller, such as a cylindrical roller, a spherical roller or a tapered roller, or may be provided on the outer raceway, depending on the application.

A number of aspects/embodiments of the invention have been described. It is to be understood that each aspect/embodiment may be combined with any other aspect/embodiment. Moreover the invention is not restricted to the described embodiments, but may be varied within the scope of the accompanying patent claims. The invention is defined by appended claims only.

## Claims

1. Use of a first roughness lay to reduce micropitting in a roller bearing that experiences sliding at a rolling contact interface in a direction (y) transverse to the direction of rolling (x), the bearing (110) comprising an inner ring (112), an outer ring (114) and at least one set of rollers (117), which are disposed between an inner raceway (113) of the bearing inner ring and an outer raceway of the bearing outer ring, wherein

   - an outer surface of at least one roller is defined as a first rolling contact surface;
   - at least one of the inner raceway (113) and the outer raceway is defined as a second rolling contact surface; and
   - one of the first and second rolling contact surfaces has a greater surface roughness than the other of the first and second rolling contact surfaces, and wherein the first roughness lay has an orientation angle θ relative to the direction of rolling of between 0 and 90° and is provided on the rougher of the first and second rolling contact surfaces.

2. Use as claimed in claim 1, wherein the orientation angle θ of the first roughness lay is given by:

$$\theta = \tan^{-1}(u_{sy}/u_{sx}),$$

   where

   $u_{sx}$ = maximum sliding velocity along the rolling direction $x$ and
   $u_{sy}$ = maximum sliding velocity along the transverse direction $y$.

3. Use as claimed in claim 1 or 2, wherein the rougher of the first and second rolling contact surfaces is provided with a second roughness lay with a second orientation angle $\theta_2$ of between 0 and -90° relative to the direction of rolling.

4. Use as claimed in any preceding claim, wherein the first roughness lay is provided on the rolling contact surface of at least one roller (117).

5. Use as claimed in any of claims 1 to 3, wherein the first roughness lay is provided on the inner raceway (113, 513) and/or on the outer raceway.

## Patentansprüche

1. Verwendung einer ersten Rauigkeitslage zur Reduzierung von Graufleckigkeit in einem Wälzlager, das an einer Wälzkontaktgrenzfläche ein Gleiten in einer quer zu der Wälzrichtung (x) verlaufenden Richtung (y) erfährt, wobei das Lager (110) einen Innenring (112), einen Außenring (114) und mindestens einen Satz Rollen (117) umfasst, die zwischen einer inneren Laufbahn (113) des Lagerinnenrings und einer äußeren Laufbahn des Lageraußenrings angeordnet sind, wobei:

   - eine Außenfläche mindestens einer Rolle als eine erste Wälzkontaktfläche definiert ist;
   - mindestens eine der inneren Laufbahn (113) und der äußeren Laufbahn als eine zweite Wälzkontaktfläche definiert ist; und
   - eine der ersten und zweiten Wälzkontaktfläche eine größere Oberflächenrauigkeit als die andere der ersten und zweiten Wälzkontaktfläche aufweist,

   und wobei die erste Rauigkeitslage einen Ausrichtungswinkel θ bezüglich der Wälzrichtung von zwischen 0 und 90° aufweist und auf der raueren der ersten und zweiten Wälzkontaktfläche vorgesehen ist.

2. Verwendung nach Anspruch 1, wobei der Ausrichtungswinkel θ der ersten Rauigkeitslage durch Folgendes gegeben wird:

$$\theta = \tan^{-1}(u_{sy}/u_{sx}),$$

   wobei $U_S$

   $_x$ = maximale Gleitgeschwindigkeit entlang der Wälzrichtung x und
   $U_{sy}$ = maximale Gleitgeschwindigkeit entlang der Querrichtung y.

3. Verwendung nach Anspruch 1 oder 2, wobei die rauere der ersten und zweiten Wälzkontaktfläche mit einer zweiten Rauigkeitslage versehen ist, die einen zweiten Ausrichtungswinkel $\theta_2$ von zwischen 0 und -90° bezüglich der Wälzrichtung aufweist.

**4.** Verwendung nach einem vorhergehenden Anspruch, wobei die erste Rauigkeitslage auf der Wälzkontaktfläche mindestens einer Rolle (117) vorgesehen ist.

**5.** Verwendung nach einem der Ansprüche 1 bis 3, wobei die erste Rauigkeitslage auf der inneren Laufbahn (113, 513) und/oder der äußeren Laufbahn vorgesehen ist.

## Revendications

**1.** Utilisation d'une couche ayant une première rugosité pour réduire les micro-piqûres dans un palier à roulement subissant un glissement au niveau d'une interface de contact de roulement dans une direction (y) transversale à la direction de roulement (x), le palier (110) comprenant une bague interne (112), une bague externe (114) et au moins un jeu de rouleaux (117) qui sont disposés entre un chemin de roulement interne (113) de la bague interne du palier et un chemin de roulement externe de la bague externe du palier,

   - une surface externe d'au moins un rouleau étant définie en tant que première surface de contact de roulement ;
   - au moins l'un parmi le chemin de roulement interne (113) et le chemin de roulement externe étant défini en tant que deuxième surface de contact de roulement ; et
   - l'une parmi la première et la deuxième surface de contact de roulement ayant une plus grande rugosité de surface que l'autre parmi la première et la deuxième surface de contact de roulement, et la couche ayant une première rugosité ayant un angle d'orientation θ par rapport à la direction de roulement compris entre 0 et 90° et étant prévue sur la plus rugueuse parmi la première et la deuxième surface de contact de roulement.

**2.** Utilisation selon la revendication 1, dans laquelle l'angle d'orientation θ de la couche ayant la première rugosité est donné par :

$$\theta = \tan^{-1}(u_{sy}/u_{sx}),$$

où

   $u_{sx}$ = vitesse de glissement maximale le long de la direction de roulement $x$ et
   $u_{sy}$ = vitesse de glissement maximale le long de la direction transversale $y$.

**3.** Utilisation selon la revendication 1 ou 2, dans laquelle la plus rugueuse parmi la première et la deuxième surface de contact de roulement est pourvue d'une couche ayant une deuxième rugosité avec un deuxième angle d'orientation $\theta_2$ compris entre 0 et -90° par rapport à la direction de roulement.

**4.** Utilisation selon l'une quelconque des revendications précédentes, dans laquelle la couche ayant la première rugosité est prévue sur la surface de contact de roulement d'au moins un rouleau (117).

**5.** Utilisation selon l'une quelconque des revendications 1 à 3, dans laquelle la couche ayant la première rugosité est prévue sur le chemin de roulement interne (113, 513) et/ou sur le chemin de roulement externe.

Figure 1

Figure 2

Figure 3

$$90^0 > \theta > 0^0$$

Figure 4

113

y x

$$90^0 > \theta_1 > 0^0$$

$$0° > \theta_2 > -90°$$

513

y x

Figure 5

**EP 2 885 549 B1**

**Patent documents cited in the description**

- US 5503481 A